# EUROPEAN PATENT APPLICATION

(11) **EP 2 442 564 A1**
(43) Date of publication of application: **18.04.2012**
(21) Application number: 10785761.7
(22) Date of filing: 11.06.2010
(51) Int. Cl.: H04N 7/173, H04N 7/08

(54) **METHOD AND DEVICE FOR OBTAINING AND PROVIDING MEDIA DATA**

(30) Priority: 13.06.2009 CN 200910150509
(71) Applicant: Huawei Technologies Co., Ltd., Shenzhen, Guangdong 518129 (CN)
(72) Inventor: SHI, Teng, Shenzhen Guangdong 518129 (CN); YUAN, Weizhong, Shenzhen Guangdong 518129 (CN); YUE, Peiyu, Shenzhen Guangdong 518129 (CN); ZHANG, Yuanyuan, Shenzhen Guangdong 518129 (CN); LIU, Guangyuan, Shenzhen Guangdong 518129 (CN); TIAN, Yonghui, Shenzhen Guangdong 518129 (CN); ZHANG, Chuxiong, Shenzhen Guangdong 518129 (CN)
(74) Representative: Charles, Glyndwr
(86) International application number: PCT/CN2010/073792
(87) International publication number: WO 2010/142248

(57) **Abstract**

Embodiments of the present invention relate to the field of wireless communication technologies, and disclose a method and an apparatus for obtaining and providing media data to simplify the processing on a server and overcome the incapability of meeting dynamic personalized requirements of a user in the process of playing value-added service contents. The method for obtaining media data includes: receiving at least one piece of personalized option information of a first media data stream sent by a server; selecting required personalized option information in the at least one piece of personalized option information; sending the selected personalized option information to the server; and receiving the first media data stream that is delivered by the server according to the selected personalized option information. The embodiments of the present invention may be applied in controlling presentation of other media data streams that are played on the terminal in parallel with a primary media data stream.

## Description

This application claims priority to Chinese Patent Application No. 200910150509.3, filed with the Chinese Patent Office on June 13, 2009 and entitled "METHOD AND APPARATUS FOR OBTAINING AND PROVIDING MEDIA DATA", which is incorporated herein by reference in its entirety.

### FIELD OF THE INVENTION

The present invention relates to the field of wireless communications technologies, and in particular, to a method and an apparatus for obtaining and providing media data.

### BACKGROUND OF THE INVENTION

With the development of digital broadcast television technologies and the convergence of communications services, forms of media are diversified, including not only conventional audios and videos but also texts, graphics, animations, and interactions with users. The texts, graphics, and animations may provide users with value-added services such as captions, titles, extra prompts, advertisements, and notifications. Such value-added service content may provide the users with better experience and better value-added services.

Schemes and technical standards for presenting the value-added service content are diverse. A typical scheme is as follows: A head-end system is responsible for consolidating all value-added service content, and a user equipment supports a rich media (Rich Media) technology to present different types and applications of media.

A head-end (head-end, server side) system may superpose, on the basis of an underlying video, texts and pictures that need to be added in the content of the underlying video directly, and deliver the superposed video content to the user equipment. The video content may be recorded by a video compilation device or hardware specially designed for superposing captions onto graphics, and captions or picture content may be superposed in underlying video content.

In the process of developing the present invention, it is found that a head-end system may consolidate value-added service content, but the consolidation requires an additional process of superposing captions onto graphics on the server, which increases complexity of processing. Moreover, the server uses static data of user preferences as a basis, and is unable to capture dynamic user preferences and may hardly meet a personalized requirement of the user in real time.

### SUMMARY OF THE INVENTION

Embodiments of the present invention disclose a method and an apparatus for obtaining and providing media data to overcome problems of complicated processing on a server and the incapability of meeting a dynamic personalized requirement of a user in a process of playing value-added service content.

Embodiments of the present invention adopt the following technical solution:
A method for obtaining media data according to an embodiment of the present invention includes:
   receiving at least one piece of personalized option information of a first media data stream sent by a server;
   selecting required personalized option information from the at least one piece of personalized option information;
   sending the personalized option information which is selected to the server; and
   receiving the first media data stream which is delivered, according to the personalized option information which is selected, by the server.
A method for providing media data according to an embodiment of the present invention includes:
   delivering at least one piece of personalized option information of a first media data stream to a terminal;
   receiving personalized option information which is selected, according to the at least one piece of personalized option information, by the terminal ; and
   delivering, according to the personalized option information which is selected, the first media data stream to the terminal.
A method for obtaining media data according to an embodiment of the present invention includes:
   receiving a first media data stream that includes at least one piece of personalized option information and media content corresponding to the at least one piece of personalized option information; and
   selecting media content according to the at least one piece of personalized option information, and presenting the media content which is selected.
A method for providing media data according to an embodiment of the present invention includes:
   receiving a session setup request message sent by a terminal, where the session setup request message carries a terminal identifier (ID);
   determining, according to the terminal identifier and user personalized information corresponding to the terminal ID, a first media data stream to be delivered; and
   delivering the determined first media data stream to the terminal.
A terminal according to an embodiment of the present invention includes:
   a first receiving unit, configured to receive at least one piece of personalized option information of a first media data stream sent by a server;
   a selecting unit, configured to select required personalized option information from the at least one piece of personalized option information received by the first receiving unit;
   a sending unit, configured to send the personalized option information which is selected by the selecting unit to the server; and
   a second receiving unit, configured to receive the first media data stream which is delivered, according to the personalized option information sent by the sending unit, by the server.
An apparatus for providing media data according to an embodiment of the present invention includes:
   a first sending unit, configured to deliver at least one piece of personalized option information of a first media data stream to a terminal;
   a receiving unit, configured to receive personalized option information which is selected, according to the at least one piece of personalized option information, by the terminal; and
   a second sending unit, configured to deliver, according to the personalized option information received by the receiving unit, the first media data stream to the terminal.

In the method and apparatus for obtaining and providing media data according to the embodiments of the present invention, the terminal selects the personalized option information of the first media data stream, and sends the selected information to the server. Therefore, the server may deliver the first media data stream according to the received personalized option information. The embodiments of the present invention may present the first media data stream on the terminal dynamically. Because the server does not need to execute a complicated processing procedure to superpose the first media stream onto other media data streams (such as videos or audios) demanded by the user, the complexity of server processing is lowered.

In addition, in the embodiments of the present invention, the terminal receives from the server the first media data stream that includes at least one piece of personalized option information and the media content corresponding to the personalized option information. The terminal selects the media content according to the personalized option information and presents the selected media content, which enables concurrent playing of the first media data stream and the media data stream demanded by the user, and lowers the complexity of the server processing.

### BRIEF DESCRIPTION OF THE DRAWINGS

To make the technical solution in the embodiments of the present invention or in the prior art clearer, the accompanying drawings for illustrating the embodiments of the present invention or the prior art are briefly described below. Evidently, the accompanying drawings illustrate some exemplary embodiments of the present invention, and persons skilled in the art may derive other drawings from such accompanying drawings without creative efforts.
FIG. 1 is a flowchart of a method for obtaining media data according to an embodiment of the present invention;
FIG. 2 is a flowchart of a method for providing media data according to an embodiment of the present invention;
FIG. 3 is a flowchart of another method for obtaining media data according to an embodiment of the present invention;
FIG. 4 is a flowchart of another method for providing media data according to an embodiment of the present invention;
FIG. 5 is a flowchart of a method for controlling presentation of media data according to a first application embodiment of the present invention;
FIG. 6 is a flowchart of a method for controlling presentation of media data according to a second application embodiment of the present invention;
FIG. 7 is a flowchart of a method for controlling presentation of media data according to a third application embodiment of the present invention;
FIG. 8 is a flowchart of a method for controlling presentation of media data according to a fourth application embodiment of the present invention;
FIG. 9 is a schematic diagram of a terminal according to an embodiment of the present invention; and
FIG. 10 is a schematic diagram of an apparatus for providing media data according to an embodiment of the present invention.

### DETAILED DESCRIPTION OF THE EMBODIMENTS

The method and apparatus for obtaining and providing media data according to the embodiments of the present invention are described below in detail with reference to accompanying drawings.

It should be noted that the embodiments to be described are exemplary, not covering all embodiments of the present invention. All other embodiments, which may be derived by persons skilled in the art from the embodiments given here without creative efforts, shall fall within the protection scope of the present invention.

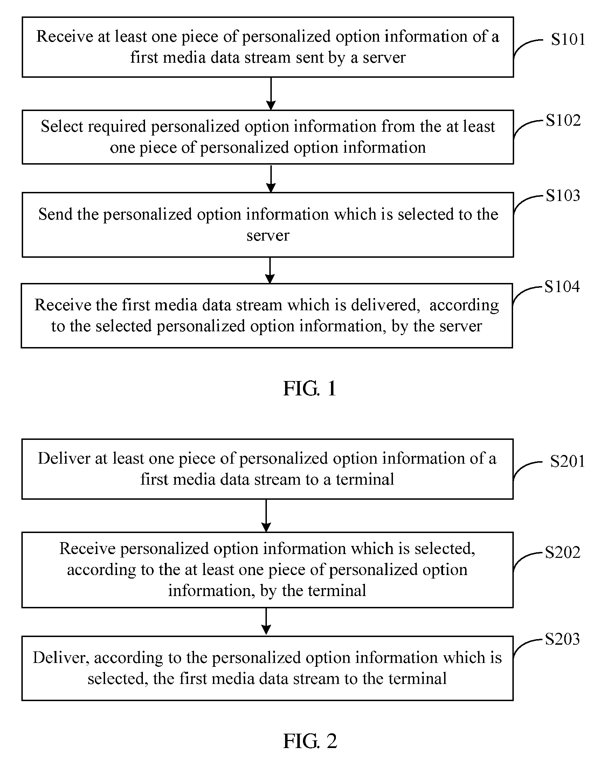

As shown in FIG. 1, a method for obtaining media data according to an embodiment of the present invention includes the following steps:
S101: Receive at least one piece of personalized option information of a first media data stream sent by a server.

The first media data stream may carry texts, pictures, animations or at least one of the above three.
S102: Select required personalized option information from the at least one piece of personalized option information.

In the embodiment of the present invention, the user may select, according to the at least one piece of personalized option information, required personalized option information by the terminal, and send the personalized option information which is selected to the server. The personalized option information may be personalized option information specific to a format supported by the terminal, such as JPEG, BMP, GIF, and PNG; or personalized option information specific to a data type, such as a graphic style of classical nostalgia, Japanese cartons, ink landscape, an oil painting style, a crisp style, and so on. The personalized option information may also be personalized option information specific to data content themes, such as communication service, vehicles, IT cyber service, and home decoration, and so on; or the personalized option information may also be personalized option information specific to improving the individual experience of the user, such as presentation mode and presentation location; or the personalized option information may also be a personalized option specific to different media streams. The details are not introduced here.
S103: Send the personalized option information which is selected to the server.
S104: Receive the first media data stream which is delivered, according to the personalized option information which is selected, by the server.

In the embodiment of the present invention, a second media data stream may be a media stream selected by the terminal for playing, such as a video stream or an audio stream, and the first media data stream may be a media stream parallel to the media stream, such as the video stream or audio stream, selected by the terminal for playing,. For example, the first media data stream may be a Timed Text put forward by the 3GPP (3rd Generation Partnership Project, 3rd Generation Partnership Project), or Timed Graphics put forward lately. The work item of Timed Graphics aims at using an independent graphics stream parallel to the audio stream or video stream to send additional graphic information to the terminal. For example, a picture may be used to present a name tag, a score chart, a match result chart, or advertisement information. In other embodiments described below, the first media data stream and the second media data stream are the same as those described above, which are not further introduced below.

In step S101 above, the at least one piece of personalized option information of the first media data stream may be carried in a first media data stream delivered by the server or a Session Description Protocol (SDP) information of a message delivered by the server. The first media data stream delivered by the server to the terminal may be a media data stream selected by the server for the terminal, but the media data stream selected by the server for the terminal further includes at least one piece of personalized option information selectable by the terminal. Therefore, after receiving the media data stream selected by the server for the terminal, the terminal may present the selected media data stream, and select required personalized option information from the at least one piece of personalized option information.

As shown in FIG. 2, a method for providing media data according to another embodiment of the present invention includes the following steps:
S201: Deliver at least one piece of personalized option information of a first media data stream to a terminal.
S202: Receive personalized option information which is selected, according to the at least one piece of personalized option information, by the terminal.
S203: Deliver, according to the personalized option information which is selected, the first media data stream to the terminal.

In the method for obtaining or providing media data in the embodiment of the present invention, the terminal selects the personalized option information of the first media data stream, and sends the personalized option information which is selected to the server. Therefore, the server may adjust the content carried in the first media data stream according to the personalized option information which is selected, and send the adjusted first media data stream to the terminal. The embodiment of the present invention may present the first media data stream on the terminal dynamically in a personalized way. Because the server may play the first media stream and the second media data stream concurrently without involving complicated processing, the complexity of the media processing of the server is lowered.

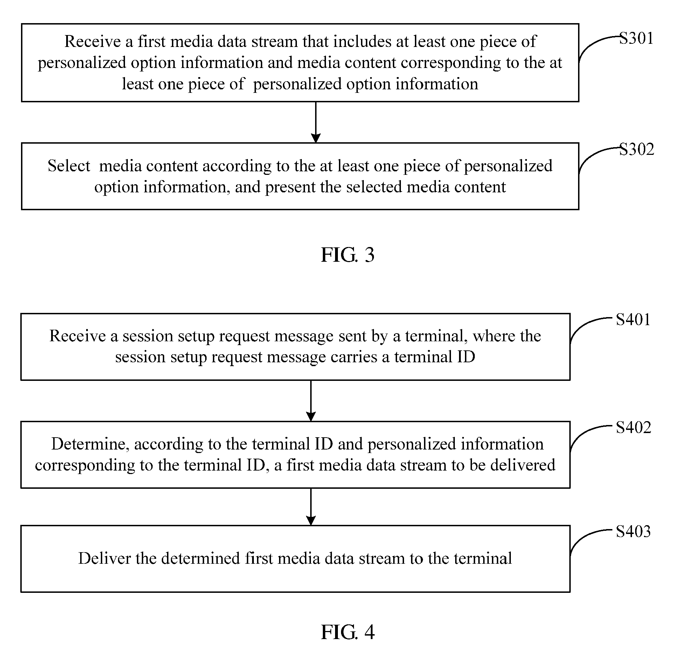

As shown in FIG. 3, another method for obtaining media data according to an embodiment of the present invention includes the following steps:
S301: Receive a first media data stream that includes at least one piece of personalized option information and media content corresponding to the at least one piece of personalized option information.
S302: Select media content according to the at least one piece of personalized option information, and present the selected media content.

The method for obtaining media data in the embodiment of the present invention may obtain and present media content directly according to the personalized option information, and present the first media data stream on the terminal dynamically.

As shown in FIG. 4, another method for providing media data according to an embodiment of the present invention includes the following steps:
S401: Receive a session setup request message sent by a terminal, where the session setup request message carries a terminal ID.
S402: Determine, according to the a first media data stream to be delivered.
S403: Deliver the determined first media data stream to the terminal.

On the basis of the foregoing solution, before step S402, the method for providing media data further includes: obtaining a user personalized information corresponding to the terminal ID according to the terminal ID.

In the method for providing media data in the embodiment of the present invention, the server obtains corresponding user personalized information according to the terminal ID in the session setup request message sent by the terminal, and selects the first media data stream to be sent to the user. In this way, the server may concurrently play the first media data stream and the media data demanded by the terminal without involving complicated processing, which therefore may lower the complexity of the media processing of the server.

The following application embodiments 1-4 describe the specific application of the technical solution of the present invention in controlling presentation of media data streams. The following embodiments are optional solutions of the present invention, and an arrangement order of the embodiments does not represent an order of preference. In the following embodiments, the terminal is a Timed Graphics device, and the server is a Timed Graphics head-end system. The following embodiments take the presentation of a timed graphics stream as an example, but the technical solution of the present invention is not limited to this example, but is also applicable to personalized presentation of a timed text, a timed carton, and so on, and the presentation method is the same.

### Application Embodiment 1

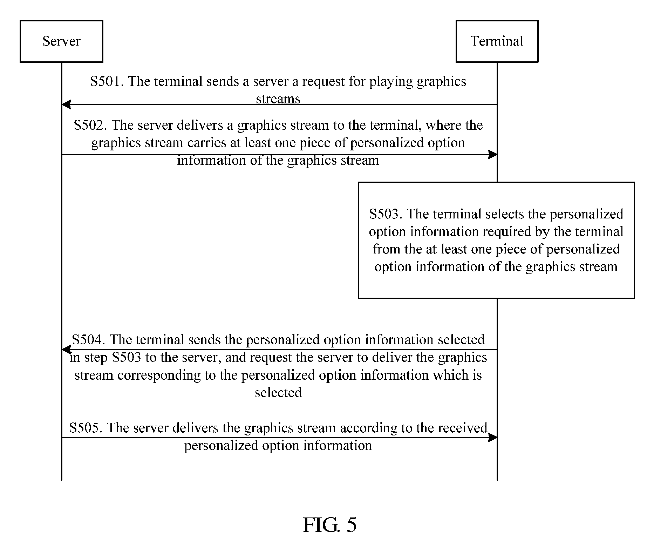

As shown in FIG. 5, a method for controlling presentation of media data according to the embodiment may include the following steps:
S501: The terminal sends a server a request for playing a first media data stream. In this embodiment, the request for playing a first media data stream may be a request for playing a graphics stream. The graphics stream requested to be played by the request for playing the graphics stream is parallel to a video or audio demanded by the terminal, and is content to be presented by the terminal in a personalized way. The request for playing the graphics stream may be sent together with the terminal's requests for playing videos or audios to the server at the same time.

The terminal may also request playing texts or animations.
S502: The server delivers a graphics stream to the terminal. The graphics stream carries at least one piece of personalized option information of the graphics stream.

The content of the at least one piece of personalized option information may be at least one of the following: a graphic type of the graphics stream, a graphic format of the graphics stream, a graphic content theme of the graphics stream, a graphic presentation mode of the graphics stream, and a presentation location of the graphics stream. Each personalized option may be displayed as graphics, texts or animations, or displayed as buttons, menus, and drop-down list boxes.

The following example illustrates how a graphics stream that carries personalized option information is delivered to the terminal. In this example, the personalized option information is a graphic style.

For example, a sample description table of the graphics may be extended so that the personalized option information is delivered to the terminal. For example, the following is extended sample description information:

```
          class OptionRecord {
          unsigned int(16) option-ID;
          unsigned int(8)option-name-length;
          unsigned int(8)option[option-name-length];
          }
```

In the extended sample description information above, class OptionRecord is used to describe a type of option, an option-ID represents an option ID (an ID of a piece of personalized option information in the sample description table), and option-name-length indicates length of the name of the option.

```
          class GraphicsTypeRecord {
          unsigned int(16) type-ID;
          unsigned int(8)type-name-length;
          unsigned int(8)type[type-name-length];
          unsigned int(8)type-description-length;
          unsigned int(8)description[type- description-length];
          OptionRecord relatedOptions ;
          }
```

Class GraphicsTypeRecord (graphic type record) describes a type of graphics. A type-ID may represent a different graphic style, which may be expressed by a sequence number. For example, 1 represents a classical style, 2 represents a Japanese carton style, and 3 represents an ink landscape style. OptionRecord is optional here. However, when the specific content of each type of personalized option information is a combination of one or more pieces of information, the one or more pieces of information may be associated with the same option by using the same OptionRecord information. For example, if a piece of personalized option information includes a graphic and a text description, the graphic may be associated with the text description by using the same option-ID. For example, the graphic style is 1 and its corresponding option-ID is x, and the type of the text description is 2 and its corresponding option-ID is also x, and therefore, the graphic style may be associated with the type of the text description by using the same option-ID x to form one personalized option.

The same type of personalized options may be associated in the following way.

```
          class GraphicsSampleEntry() extends SampleEntry ('gr3g') {
            ...... Basic entry in the graphic content description information
            GraphicsTypeRecord typeInfo; //extension entry, for storing content-related
 user personalized information
          }
```

TypeInfo may indicate description information of a type of graphics. Therefore, the same type of personalized options may be associated in this way.

The personalized option information delivered by the server to the terminal includes type description information. Typical type description information includes an ID, a name, and a description. The description information required by the server may be extracted from the typeInfo of a graphic file. Multiple pieces of type description information may be encapsulated into a special type description field. The description field may be included in a data packet of the graphics stream.

After receiving such personalized option information, the terminal may send the type description information in a form of a list to the user for selecting. Table 1 shows type description information of personalized option information.

**Table 1 Type description information of personalized option information**

| | Not Necessarily Displayed/Displayed | Not Necessarily Displayed/Displayed | Displayed | Displayed |
|---|---|---|---|---|
| Option 1 | Sequence number 1 | Type ID 1 | Type name 1 | Type description 1 |
| Option 2 | Sequence number 2 | Type ID 2 | Type name 2 | Type description 2 |
| Option 3 | Sequence number 3 | Type ID 3 | Type name 3 | Type description 3 |

In this way, when the user selects type 2, it is sure that a selected sequence number is "sequence number 2" and that a selected type ID is "type ID 2".

To provide personalized graphics streams for the terminal, the server needs to improve storage of graphic content. Improvements are as follows:
(a) The server needs to store the personalized option information corresponding to the graphic content when storing the graphic content.
(b) If the personalized option information is not directly stored in a content track (Track) of a graphic content file, the server needs to identify a mapping relationship between specific graphic content and the personalized option information when storing the content.

Specifically, the personalized option information is stored in an extended sample description table of the file, or in extended option description information of a content track of the file. The personalized option information may be media description information or an ID corresponding to the media description information.

In this way, once the personalized option information is obtained, corresponding graphic content may be associated with the personalized option information. Assuming that a file storage format is an ISO Base Media File Format (the International Organization for Standardization Base Media File Format, International Organization for Standardization Base Media File Format), a corresponding extension attribute may be added in a description part of the file so that the description part includes the personalized option information. In a reference embodiment, the foregoing GraphicsTypeRecord information is added in the description part. In this way, the server may extract extended description information, and associate the extended description information with a corresponding graphic type. For example, if the type of graphic content is IT cyber, when the server needs to provide a graphics stream of an IT cyber type, the server may associate the graphic content with corresponding personalized option information "IT cyber".
S503: The terminal selects the personalized option information required by the terminal from the at least one piece of personalized option information of the graphics stream.

In this step, the terminal presents a default graphics stream sent in step S502.
S504: The terminal sends the personalized option information selected in step S503 to the server, and requests the server to deliver the graphics stream corresponding to the personalized option information which is selected.

In this step, an existing RTSP (Real Time Streaming Protocol, Real Time Streaming Protocol) may be extended to fulfill the request for delivering the graphics stream. The terminal may add the personalized option information which is selected to the Get_Parameter (get parameter) signaling of the RTSP, as shown below:
C->S: RTSP/1.0 200 OK
CSeq: 431
Content-Length: 16
Content-Type: text/parameters
graphic_index: 2

In the signaling message above, "2" in "graphic_index:2" is a sequence number of the graphic type, and means that the type indicated to the server is graphic style 2 (a Japanese cartoon style mentioned above). An ID, a name description, or a Universal Resource Identifier (URI) may be used instead, for example, a type-ID in the GraphicsTypeRecord, or a type name.
S505: The server delivers the graphics stream according to the received personalized option information.

Specifically, if the graphics stream sent in step S502 includes the graphic content whose graphic type sequence number is 1 (corresponding to a classical nostalgia style), when the server receives the personalized option information "2", the graphics stream delivered by the server subsequently is no longer to carry the graphic content of the classical nostalgia style; instead, the server obtains the graphics of the Japanese carton style corresponding to graphic type 2 according to the enhanced description information of the graphics, and adds the obtained graphics to the graphics stream.

In this way, the terminal may display a personally selected graphics stream.

In this embodiment, the terminal sends a request for playing graphics stream to the server when demanding a program, and selects a required graphics stream from the personalized option information, after receiving a graphics stream delivered by the server, in which the received graphics stream includes the personalized option information of the graphics stream, and sends the personalized option information which is selected to the server. In this way, the server may deliver the graphics stream according to the personalized option information selected by the terminal, and deliver an adjusted graphics stream to the terminal. Therefore, when playing a video or audio, the terminal may present personalized graphics streams concurrently, interactions are implemented between the terminal and the server, delivery of redundant information from the server is avoided, and a network load is relieved.

### Application Embodiment 2

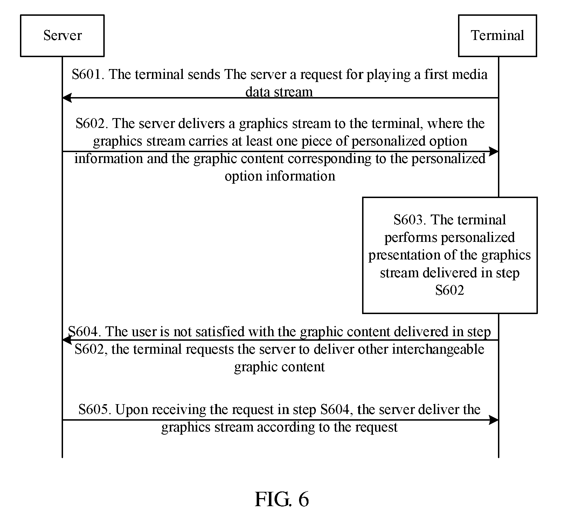

As shown in FIG. 6, this embodiment may include the following steps:
S601: The terminal sends the server a request for playing a first media data stream. This step is the same as step S301.
S602: The server delivers a graphics stream to the terminal. The graphics stream carries at least one piece of personalized option information and the graphic content corresponding to the personalized option information.

If the first media data stream of other types is delivered, the first media data stream delivered by the server needs to include at least one piece of personalized option information and media content corresponding to the at least one piece of personalized option information.

The graphic content corresponding to different personalized option information respectively may be presented independently, and the terminal may select and present one of interchangeable graphic content except default graphic content according to the personalized option information. In addition, only the graphic content corresponding to one piece of the personalized option information may be presented at a time. The terminal may select a different presentation mode in the process of presenting the graphic.

The graphic content corresponding to each type of personalized option information may include one piece of graphic type description information corresponding to the GraphicsTypeRecord described in the first embodiment. The graphic content corresponding to each type needs to be identified by corresponding graphic type information such as a type-ID. An independent packet may be used to encapsulate the same type of graphic content and incorporate corresponding type information such as a type-ID, or explicit type description information such as a type-ID may be added to the content in a packet. After a graphic type is selected, the terminal identifies and filters out the graphic content corresponding to the type based on the type information, and presents the graphic content.

A parameter may be used in the personalized option information to specify the total quantity of personalized option information available for selection. For example, the server may provide 10 types of interchangeable graphic content, but provides only 5 pieces of personalized option information available for selection at a time. Therefore, the terminal knows that there exists other personalized option information available for selection and graphic content corresponding to other personalized option information. Therefore, if the terminal is not satisfied with currently provided personalized option information, the terminal may request the server to provide other personalized option information. In a scenario, "THIS/TOTAL" may be used to identify each type of graphic content, in which "THIS" represents the quantity of delivered graphic content types, and "TOTAL" represents the total quantity of graphic content types, and, the terminal knows that the server has more content types available for selection if the value of "THIS" is less than the value of "TOTAL". Alternatively, an indicator like "More (more options)" is used to tell the terminal that more graphic types are available for selection.
S603: The terminal performs personalized presentation of the graphics stream delivered in step S602.

When presenting the graphics, the terminal may exercise control over the graphics to present the graphics in a personalized way based on an interactive operation performed by the user on the terminal. The terminal may select one of other interchangeable graphic content different from the default graphic content according to the personalized option information. For example, if the personalized option information includes different presentation modes of graphics such as presentation location, presentation effect or a combination of presentation location and presentation effect, the terminal may select different presentation modes according to the personalized option information. If the user does not perform any interaction with the terminal, the terminal presents the default graphic content according to a default presentation mode designated by the system.

For example, the server delivers graphics streams of a group (such as 3 types) of interchangeable graphic content, and the user may directly select, based on the personalized option information, one type (such as the first type, the second type or the third type) of graphics from this group of graphic content, and the terminal presents the selected one type of graphics.
S604: If the user is not satisfied with the graphic content delivered in step S602, the terminal may request the server to deliver other interchangeable graphic content.

When presenting the default graphics stream or the selected graphics stream, if the terminal finds that the server may provide more interchangeable graphic content (for example, the terminal displays "More", "Next" or "Next Group"), the terminal may send a request message to the server to request other interchangeable graphic content. Like the request in the first embodiment, this request message may be generated by extending existing RTSP signaling.
S605: Upon receiving the request in step S604, the server delivers the graphics stream according to the request.

No definite time sequence exists among step S604, step S605, and step S603. If the user thinks that the graphics stream delivered in step S602 meets a requirement, the user does not need to select other graphics streams.

If the terminal specifies that more other types of graphics are required, the graphics stream does not include the previous delivered graphic content any more, but includes other graphic content that have not been delivered and personalized option information corresponding to the other graphic content.

In this way, the terminal may select and present the adjusted graphics stream in a personalized way.

In this embodiment, after receiving from the terminal a request for playing graphics streams, the server delivers a graphics stream to the terminal, where the graphics stream includes a group of graphic content of different graphic types; the terminal may present the graphic content of a default type directly, or select one type in the graphic content and present the graphic content corresponding to the selected type. If the user is not satisfied with the presentation, the terminal may request the server to deliver more other types of graphic content. Therefore, this embodiment implements the interaction between the terminal and the server, and meets a dynamic personalized requirement of the terminal, and the server delivers graphic content as required by the terminal and avoids delivery of redundant information, which may relieve the network load.

### Application Embodiment 3

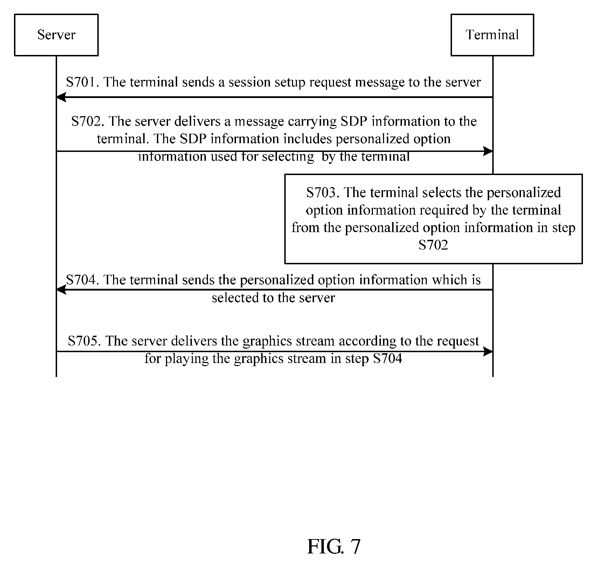

As shown in FIG. 7, this embodiment may include the following steps:
S701: The terminal sends a session setup request message to the server.
S702: The server delivers a message carrying SDP information to the terminal. The SDP information includes personalized option information used for selecting by the terminal.

The personalized graphic content in this embodiment and other embodiments may also exist in an ISO file in the form of tracks, and existing track selection description information needs to be extended. Table 2 shows extended track selection description information.

**Table 2 Extended track selection description information**

| **Name** | **Attribute** |
|---|---|
| Language | Language type |
| Bandwidth | Bandwidth value |
| Codec | Code type |
| Screen size | Screen size |
| Max packet size | Maximum value of the packet |
| Media type | Media type |
| Customize information | Personalized option information. This parameter information may be stored in a head box of a track (or in media-level SDP information). For the form of this information, see description about "class GraphicsTypeRecord (graphic type record)" in embodiment 1 above. |

Therefore, for the message carrying SDP (Session Description Protocol, Session Description Protocol) information delivered by the server, a media-level (media-level) attribute has been added to describe the personalized option information of the media stream, so that the terminal may select required content according to the personalized option information.
m=graphic 49232 RTP/AVP 98
a= customize -info:car
c=IN IP4 192.168.10.11

In the media description above, "a=personal-info:car" refers to one piece of personalized option information identified as "car". For the media description here, reference may be made to the media description described in the first embodiment.

Alternatively, the media-level attribute includes format information (such as JPEG, BMP, GIF, and PNG) of the graphic content may be provided by the server, and the terminal selects, according to the capability of the terminal, a format supported by the terminal.
m=graphic 49232 RTP/AVP 98
a= customize-info:jpg
c=IN IP4 192.168.10.11

In the media description above, "a= customize-info:jpg" refers to that the graphic content supported by the terminal is a JPEG format.

In other embodiments of the present invention, the message carrying SDP information may carry a media ID corresponding to the first media data stream. For example, Table 3 shows mapping relationships among the personalized option information provided to the user, media streams, and media stream IDs.

**Table 3 Mapping relationships among personalized option information, media streams, and media stream IDs**

| Personalized Option Information | Corresponding Media Stream | Corresponding Media Stream ID |
|---|---|---|
| Personalized option 1 | Media stream m1 | Media stream ID_m1 |
| Personalized option 2 | Media stream m2 | Media stream ID_m2 |
| Personalized option 3 | Media stream m3 | Media stream ID_m3 |

m=graphic 49232 RTP/AVP 98
a=attribute: ID_m3
c=IN IP4 192.168.10.11

In the foregoing media description, if the user selects personalized option 3, the terminal may return "ID_m3" to the server, so that the server delivers media stream m3 to the terminal.

Alternatively, according to capabilities of the terminal and functions of the terminal, different Profiles (profiles) and Levels (levels) are defined. the Profile indicates the functions required for playing the stream on the terminal, and the level indicates the level of support that needs to be provided. Table 4 shows brief settings of profiles and levels.

**Table 4 Settings of profiles and levels**

| | Leve11 | Leve12 |
|---|---|---|
| Profile 1 | No interaction is supported, or only basic graphic formats are supported. | No interaction is supported, or basic graphic formats and Scalable Vector Graphics (SVGs) are supported. |
| Profile2 | Interactions are supported, or only basic graphic formats are supported. | Interactions are supported, or basic graphic formats and SVGs are supported. |

Therefore, if the media description includes:
m=graphic 49232 RTP/AVP 98
a= fmtp:98 profile-level-id=020001
c=IN IP4 192.168.10.11
in the description above, "profile-level-id=020001" indicates that the terminal supports profile 2 and level 1.
S703: The terminal selects the personalized option information required by the terminal from the personalized option information in step S702.

For example, if the terminal selects the media type specified by "profile-level-id=020001 ", it indicates that the profile supported by the terminal are profile 2 and level 1.
S704: The terminal sends the personalized option information which is selected to the server. Specifically, the terminal adds the required personalized option information to a request for playing a graphics stream sent to the server.

The terminal may also send only an ID corresponding to the personalized option information which is selected or a sequence number corresponding to the personalized option information which is selected to the server.
S705: The server delivers the graphics stream according to the request for playing the graphics stream in step S704.

In this embodiment, the terminal sends a session setup request message to the server, and the server sends SDP information to the terminal. The SDP information includes the personalized option information of the media data stream. The terminal sends the personalized option information which is selected to the server, and the server may deliver graphics streams according to the personalized option information which is selected. This embodiment implements interactions between the terminal and the server, and meets the dynamic personalized requirement of the terminal. The server may deliver graphics streams as required by the terminal and avoid delivery of redundant information, which relieves the network load.

### Application Embodiment 4

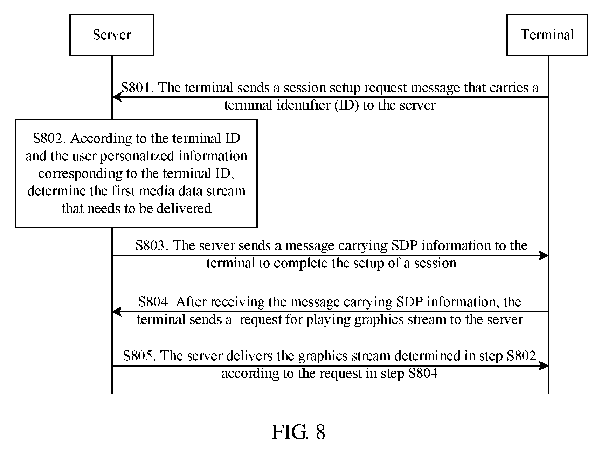

As shown in FIG. 8, this embodiment may include the following steps:
S801: The terminal sends a session setup request message to the server, in which the session setup request message carries a terminal identifier (ID).
S802: According to the terminal ID and the user personalized information corresponding to the terminal ID, the server determines the first media data stream to be delivered. In this embodiment, the first media data stream may be a graphics stream.

Specifically, the server obtains, according to the terminal ID, the user personalized information corresponding to the terminal ID. The user personalized information may include a profile of the user, subscription information of the user, a history record of the user, or preferences of the user. According to the obtained user personalized information, the server determines the graphics stream to be delivered (such as an advertisement of an article that interests the user, or a favorite content type of the user).

The user personalized information may be managed and stored by the server or by a third-party server that stores user information. If the user personalized information is managed and stored by the third-party server that stores user information, the server needs to request the user personalized information corresponding to the terminal ID from the third-party server, or request the personalized option information directly.

The server needs to store the information of the graphics stream determined for the user, in which the information of the graphics stream determined for the user includes type information corresponding to the graphics stream and is useful for delivering the graphics stream subsequently.
S803: The server sends a message carrying SDP information to the terminal to complete the setup of a session.
S804: After receiving the message carrying SDP information, the terminal sends a request for playing graphics stream to the server.
S806: The server delivers the graphics stream determined in step S802 according to the request for playing graphics stream in step 5804.

The server obtains the corresponding description information from the graphic file according to a stored graphics stream and graphic type information. The description information may be stored in an extended sample description table in the file or in extended track option description information in the file.

The server adds the graphic content that matches a graphic type corresponding to a requested graphics stream to the graphics stream, and delivers the graphics stream to the terminal.

In this embodiment, the terminal sends a session setup request message to the server, and according to the terminal ID in the session setup request and the user personalized information of the user, the server determines the graphics stream to be delivered. After the session is set up, the terminal requests the server to deliver the graphics stream. Therefore, this embodiment implements interactions between the terminal and the server, and meets a personalized requirement of the terminal. According to the user personalized information of the terminal, the server may determine the graphic content that needs to be delivered, which avoids delivery of redundant information and relieves the network load.

In step S801, the terminal may add the personalized option information to the session setup request message directly, or add the graphic formats supported by the terminal to the session setup request message, and therefore, the server may deliver the graphics stream directly according to the personalized option information carried in the session setup request message.

Persons skilled in the art understand that all or part of the steps of the method provided in the embodiments above may be implemented by a program instructing relevant hardware. The program may be stored in a computer readable storage medium. When the program runs, the program executes the steps of the method specified in any embodiment above. The storage medium may be a magnetic disk, a CD-ROM, a Read-Only Memory (Read-Only Memory, ROM), or a Random Access Memory (Random Access Memory, RAM).

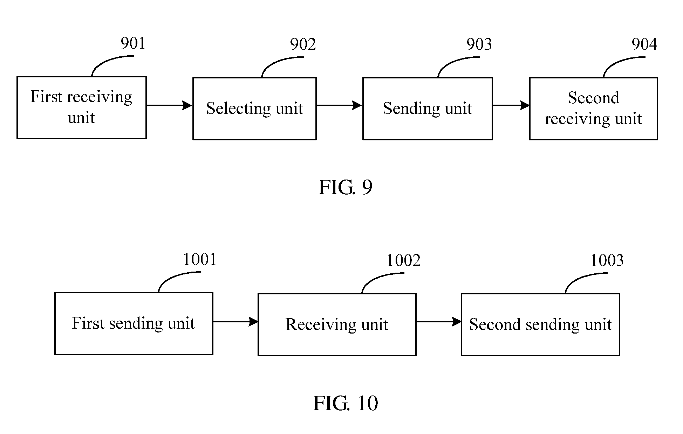

As shown in FIG. 9, a terminal according to an embodiment of the present invention includes:
a first receiving unit 901, configured to receive at least one piece of personalized option information of a first media data stream sent by a server;
a selecting unit 902, configured to select required personalized option information from the at least one piece of personalized option information received by the first receiving unit;
a sending unit 903, configured to send the personalized option information which is selected by the selecting unit to the server; and
a second receiving unit 904, configured to receive the first media data stream delivered by the server according to the personalized option information sent by the sending unit.

The first media data stream is parallel to the media streams such as videos or audios demanded by the terminal.

On the basis of the foregoing solution, the first selecting unit 901 is specifically configured to receive the first media data stream or SDP information sent by the server, where the first media data stream or SDP information includes at least one piece of personalized option information of the first media data stream; or is configured to receive the first media data stream selected and sent by the server, where the first media data stream further includes the at least one piece of personalized option information.

As shown in FIG. 10, an apparatus for presenting media data according to an embodiment of the present invention includes:
a first sending unit 1001, configured to deliver at least one piece of personalized option information of a first media data stream to a terminal;
a receiving unit 1002, configured to receive personalized option information which is selected, according to the at least one piece of personalized option information, by the terminal; and
a second sending unit 1003, configured to deliver, according to the personalized option information received by the receiving unit, the first media data stream to the terminal.

On the basis of the foregoing solution, the first sending unit 1001 is specifically configured to: send the first media data stream to the terminal according to the media data stream request from the terminal, or send SDP information to the terminal according to the session setup request from the terminal, where the first media data stream or SDP information includes at least one piece of personalized option information of the first media data stream, which is provided for the terminal. With respect to the terminal or the apparatus for providing media data according to the embodiments of the present invention, the personalized option information includes at least one of the following: a data type corresponding to the first media data stream, a format, data content, a presentation mode, and a presentation location.

In the terminal and the apparatus for providing media data according to the embodiments of the present invention, the terminal selects the personalized option information of the first media data stream, and sends the selected information to the server. Therefore, the server may adjust the second media data stream according to the received personalized option information, and send the adjusted first media data stream to the terminal. The embodiments of the present invention may present the first media data stream on the terminal dynamically in a personalized way. Because the server does not need to execute a complicated procedure to superpose the first media stream onto the second media data stream, the complexity of the server processing is lowered.

The above embodiments are exemplary embodiments of the present invention, but the protection scope of the present invention is not limited to these embodiments. Any modification or substitution readily conceivable by those skilled in the art within the scope of the technology disclosed in the present invention shall fall within the protection scope of the present invention. Therefore, the protection scope of the present invention is subject to the appended claims.

## Claims

1. A method for obtaining media data, comprising:
receiving at least one piece of personalized option information of a first media data stream sent by a server;
selecting required personalized option information in the at least one piece of personalized option information;
sending the personalized option information which is selected to the server; and
receiving the first media data stream which is delivered, according to the personalized option information which is selected, by the server.

2. The method according to claim 1, wherein the receiving at least one piece of personalized option information of a first media data stream sent by a server comprises:
receiving the first media data stream or a Session Description Protocol message sent by the server, wherein the first media data stream or the Session Description Protocol message carries the at least one piece of personalized option information.

3. The method according to claim 1, wherein the receiving at least one piece of personalized option information of a first media data stream sent by a server comprises:
receiving the first media data stream selected and sent by the server, wherein the first media data stream further carries the at least one piece of personalized option information; and
obtaining and presenting the first media data stream selected by the server, and obtaining the at least one piece of personalized option information.

4. The method according to claim 1, wherein the sending the personalized option information which is selected to the server comprises:
sending a Real Time Streaming Protocol message to the server, wherein the Real Time Streaming Protocol message carries the personalized option information which is selected.

5. The method according to any one of claims 1-4, wherein:
the first media data stream is parallel to a media data stream demanded by a terminal.

6. A method for providing media data, comprising:
delivering at least one piece of personalized option information of a first media data stream to a terminal;
receiving personalized option information which is selected, according to the at least one piece of personalized option information, by the terminal; and
delivering, according to the personalized option information which is selected, the first media data stream to the terminal.

7. The method according to claim 6, wherein the delivering at least one piece of personalized option information of a first media data stream to a terminal comprises:
sending, according to a request of the terminal for delivering the first media data stream, the first media data stream or Session Description Protocol information to the terminal, wherein the first media data stream or the Session Description Protocol information carries the at least one piece of personalized option information of the first media data stream.

8. The method according to claim 6, further comprising:
selecting personalized option information of the first media data stream for the terminal, wherein the first media data stream or Session Description Protocol information sent to the terminal as requested by the terminal comprises the personalized option information which is selected.

9. The method according to claim 7, wherein:
media content in the first media data stream or the Session Description Protocol information and corresponding personalized option information are pre-stored in a media file of an International Organization for Standardization format.

10. The method according to any one of claims 7-9, wherein:
the personalized option information is carried in a media extension attribute of the Session Description Protocol information.

11. A method for obtaining media data, comprising:
receiving a first media data stream that comprises at least one piece of personalized option information and media content corresponding to the at least one piece of personalized option information; and
selecting the media content according to the at least one piece of personalized option information, and presenting the media content which is selected.

12. A method for providing media data, comprising:
receiving a session setup request message sent by a terminal, wherein the session setup request message carries a terminal identifier,;
determining, according to the terminal identifier and user personalized information corresponding to the terminal identifier, a first media data stream to be delivered,; and
delivering the determined first media data stream to the terminal.

13. The method according to claim 12, wherein before determining, according to the terminal identifier and the user personalized information corresponding to the terminal identifier, a first media data stream to be delivered, the method further comprises:
obtaining the user personalized information corresponding to the terminal identifier according to the terminal identifier.

14. A terminal, comprising:
a first receiving unit, configured to receive at least one piece of personalized option information of a first media data stream sent by a server;
a selecting unit, configured to select required personalized option information from the at least one piece of personalized option information received by the first receiving unit;
a sending unit, configured to send the personalized option information which is selected by the selecting unit to the server; and
a second receiving unit, configured to receive the first media data stream which is delivered, according to the personalized option information sent by the sending unit, by the server.

15. The terminal according to claim 14, wherein:
the first receiving unit is specifically configured to: receive the first media data stream or Session Description Protocol information sent by the server, wherein the first media data stream or the Session Description Protocol information carries the at least one piece of personalized option information of the first media data stream; or
receiving the first media data stream selected and sent by the server, wherein the first media data stream further carries the at least one piece of personalized option information.

16. An apparatus for providing media data, comprising:
a first sending unit, configured to deliver at least one piece of personalized option information of a first media data stream to a terminal;
a receiving unit, configured to receive personalized option information which is selected, according to the at least one piece of personalized option information, by the terminal; and
a second sending unit, configured to deliver, according to the personalized option information received by the receiving unit, the first media data stream to the terminal.

17. The apparatus according to claim 16, wherein:
the first sending unit is specifically configured to: send the first media data stream or Session Description Protocol information to the terminal according to a request for delivering the first media data stream or a session setup request from the terminal, wherein the first media data stream or the Session Description Protocol information comprises the at least one piece of personalized option information of the first media data stream.
